# EUROPEAN PATENT SPECIFICATION

(11) **EP 2 840 682 B1**
(45) Date of publication and mention of the grant of the patent: **15.07.2020**
(21) Application number: 13181299.2
(22) Date of filing: 22.08.2013
(51) Int. Cl.: H02K 3/22, H02K 15/04

(54) **Strands of stator or rotor windings**
Stränge von Stator- oder Rotorwicklungen
Fils d'enroulements de stator ou de rotor

(43) Date of publication of application: 25.02.2015
(73) Proprietor: General Electric Technology GmbH, 5400 Baden (CH)
(72) Inventor: Mundstock, Matthias Christian, 67117 Limburgerhof (DE); Visintin, Massimiliano, 8002 Zurich (CH); Glover, Paul, Stafford, St174UJ (GB); Soehner, Walter, 76149 Karlsruhe (DE)
(74) Representative: BRP Renaud & Partner mbB Rechtsanwälte Patentanwälte Steuerberater

(56) References cited:
- WO-A1-00/10750
- CH-A- 375 431
- DE-C- 283 698
- US-A- 5 583 387

## Description

### FIELD OF THE INVENTION

The present disclosure relates to strands that form the conductors inside the stator or rotor windings of large power generators. In particular, the present disclosure relates to strands of such generators where the generators are air-cooled, hydrogen-cooled or water-cooled machines.

### BACKGROUND

State-of-the-art electric energy conversion relies on a three-phase power network with alternating currents (AC) at 50Hz or at 60Hz frequency and at voltage levels ranging from several hundreds of Volts to hundreds of thousands of Volts. The conversion of rotating mechanical energy into electric energy and vice versa is done by generators and by motors, respectively. Those rotating machines can be divided into asynchronous and synchronous apparatuses. The stator and rotor windings of such machines comprise Copper strands. In stator bars, the Copper strands will form a conductor after Roebelling. Windings also require groundwall insulation. An assembly consisting of a multiplicity of (Roebel) conductors in the center and of surrounding groundwall insulation is commonly referred to as a winding.

Generator bars of large power generators typically carry currents of several kA. Electric currents of this magnitude lead to considerable losses due to the resistivity of the copper strands (I²·R losses) and due to eddy currents. These losses result in dissipation of energy in the form of heat.

The groundwall insulation of a power generator will typically withstand temperatures up to a maximum of 155°C (class F) or up to a maximum of 180°C (class H). Above those temperatures, the dielectric withstand of the insulation deteriorates and electric breakdown as a consequence (local) of overheating may occur. A short-circuit that occurs in service between a winding conductor and the stator or the rotor of a generator usually entails the failure of the generator. In other words, an event such as electric breakdown is catastrophic.

To avoid insulation failure, measures have to be implemented that transfer heat out of the conductor of a winding. The groundwall insulation of a generator is generally no avail, since good electric insulator by their very nature have a low coefficient of thermal conductivity (typically 0.25 - 0.5 W/m·K). To transfer heat away from the conductors of a winding, conduits are arranged inside the conductors. In other words, the strands that make up a generator bar may be hollow on their inside. The hollow inside of these bars forms a conduit for cooling fluids. Typical cooling fluids are air, (pressurized) hydrogen, and water.

Segments with C-shape and E-shape profiles are commonly used to arrange conduits inside Copper conductors. A segment with a C-shape profile provides two teeth with flat surfaces and a groove arranged in between the two teeth. To form a hollow strand, two segments are placed on top of each other with the teeth of the two segments making contact. A similar procedure is followed for segments with E-shaped profiles. Segments with E-shaped profiles provide three teeth with flat surfaces and two grooves arranged in between the three teeth. To form a hollow strand, two E-shaped segments are placed on top of each other, such that the teeth of the two segments abutt. The two segments make contact in three places corresponding to three teeth. Two conduits corresponding to two grooves are formed in between the two E-shaped segments.

To permanently join pairs of C-shaped or E-shaped segments, they are glued together. Usually, a whole stack comprising several pairs of C-shaped or E-shaped segments is put together. After coating the surfaces of the segments with glue, pressure is applied from each side on the conductor stack. Typically this pressure would amount to 1 MPa from each side. The process usually requires a press to align and to join the segments. That press needs to be able to apply pressure from two sides.

After joining the segments, the arrangement of hollow conductors needs to be tight, so no fluid will leak out of the conduit. The term fluid in this disclosure includes gaseous coolants such as air or hydrogen. Tightness is particularly important for water-cooled machines, where small quantities of cooling fluid in contact with the groundwall insulation may result in catastrophic insulation failure. In case of hydrogen-cooled machines, the joints between the segments need to be gas-tight enough to prevent substantial leaks of hydrogen molecules through the joint.

When making stator or rotor windings for large power generators, the conductor which comprises a plurality of strands needs to be shaped. End winding sections and slot sections of the same stator or rotor bar are arranged at an angle. This arrangement is achieved through shaping the conductor. In practice, bending machines are used to align the end winding section and the slot section in accordance with the design requirements of the power generator.

The conduits inside the strands need to be flexible enough so they will not be obstructed when bending the entire conductor. Also, the joints between C-shaped and/or E-shaped segments should not break or lose tightness while being bent.

The document WO 00/10750 A1 discloses a conductor strand comprising two segments having a C- or E-profile. The segments define a conduit for a cooling fluid and are joined together via a set of protrusions and recesses.

The present disclosure is oriented towards providing the aforementioned needs and towards overcoming the aforementioned difficulties.

### SUMMARY OF THE INVENTION

The object of the present disclosure is to provide hollow strands of conductors of stator or rotor windings. These object is achieved by providing a conductor as defined in claim 1.

It is another object of the present disclosure to provide hollow strands of conductors of stator or rotor windings that are sealed, so no cooling fluid will leak from the conduit inside the hollow conductor.

It is a particular object of the present invention to provide hollow strands of conductors of stator or rotor windings with joints that allow hydrogen, water or air to flow inside the conduits without leakage.

It is yet another object of the present disclosure to provide hollow stands of conductors of stator or rotor windings that can be bent. In particular, any joints between the segments of those strands shall not break or lose tightness during bending.

### BRIEF DESCRIPTION OF DRAWINGS

The foregoing objects and many of the attendant advantages of this invention will become more readily appreciated as the same becomes better understood by reference to the following detailed description when taken in conjunction with the accompanying drawings, wherein:
Fig 1 shows as prior art a stack of segments (1a, 1b, 2a, 2b, 3a, 3b) with E-shaped profiles inserted in a press.
Fig 2 shows a cross-section of a strand according to an embodiment of this disclosure.

### DETAILED DESCRIPTION OF THE INVENTION

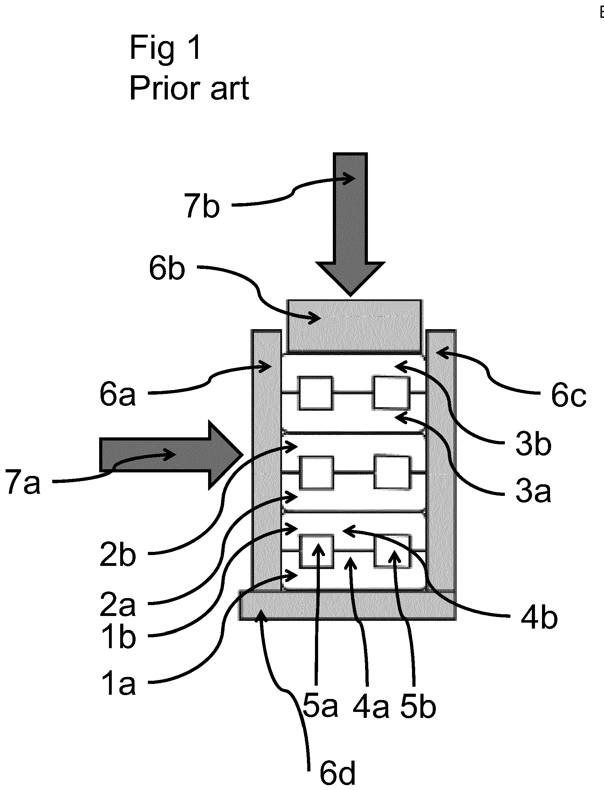

Fig 1 shows as prior art a cross-section of a conductor inserted in a press. The conductor comprises a plurality of segments 1a, 1b, 2a, 2b, 3a, 3b with E-shaped profile. Fig 1 shows segments 1a, 1b, 2a, 2b, 3a, 3b with E-shaped profiles, so each profile provides three teeth. The surfaces 4a, 4b of the teeth are substantially flat. Each segment with an E-shaped profile provides for two grooves arranged in between the teeth.

The segments 1a, 1b, 2a, 2b, 3a, 3b are arranged in three pairs 1a, 1b; 2a, 2b; 3a, 3b. Each pair 1a, 1b; 2a, 2b; 3a, 3b of segments forms a strand. The segments 1a, 1b, 2a, 2b, 3a, 3b are stacked pairwise on top of each other, so that the flat surfaces 4a, 4b of their teeth abut. In between the contacting teeth, the grooves form conduits 5a, 5b. Coolant fluid such was water, (pressurized) hydrogen or (pressurized) air flows in and out of the conduits 5a, 5b through inlets and outlets not shown on this Figure 1. The fluid thus cools the conductor from its inside by absorbing the heat generated through I²·R losses and due to eddy current losses in the conductor.

In order to arrive at the desired shape of the conductor, press plates 6a, 6b, 6c, 6d are arranged circumferentially around the conductor. The press plates 6a, 6b, 6c, 6d form a press to shape the conductor. Typically, a pressure of 1 MPa is applied in the directions indicated by the arrows 7a, 7b (and on the other side in the opposite direction).

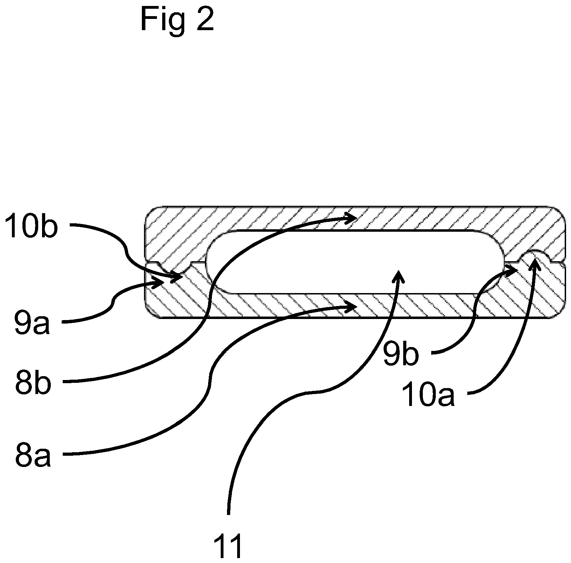

Fig 2 shows a cross-section of a strand according to an embodiment of this disclosure. Two segments 8a, 8b with C-shaped profiles are stacked on top of each other. Each segment provides two teeth 9a, 9b according to the C-shaped profile of the segment. The pair of segments with C-shaped profiles shown on Fig 2 form a strand.

A groove is provided in between the two teeth 9a, 9b. When stacked on top of one another, a conduit 11 is formed in between the two segments 8a, 8b. That conduit 11 allows for a flow of a coolant fluid through the strand. The conduit 11 inside the strand allows the strand to be cooled from its inside.

In contrast to Fig 1, the surfaces of the teeth 9a, 9b are no longer flat. Instead, the teeth 9a, 9b provide protrusions 10a and recessed seats 10b. These protrusions 10a and recessed seats 10b are arranged where the teeth of adjacent segments 8a, 8b meet. The shape of the protrusion 10a reciprocates the shape of the recessed seat 10b. The reciprocating shapes of the protrusions 10a and of the recessed seats 10b allow adjacent segments 8a, 8b to be mated. The combination of protrusions 10a and recessed seats 10b forms a joint. That joint hinders any sideways displacement of any one of the segments with respect to the other segment. In other words, the arrangement shown on Fig 2 is mechanically more protected against sideways slip of segments compared to the arrangement of Fig 1. Consequently, joining the segments may no longer require pressing the stack of segments sideways by press plates such as 6a, 6c shown on Fig 1.

In addition, the protrusion 10a of the tooth 9b also makes the tooth 9b mechanically more resilient when the strand is bent. The likelihood of a ruptured joint during bending is thus reduced compared to an arrangement with flat surfaces of the teeth.

Also, compared to flat surfaces the combination of protrusions 10a and of recessed seats 10b increases the length of the path from the inner conduit 11 to the outside of the strand. This increase in path length occurs for both of the joints on either side of the strand. Due the increase in path length there no longer is a direct passage of the coolant from the conduit 11 to the outside of the strands. That passage is obstructed by at least one protrusion 10a. The increase in path length also increases the tightness of the strand. It thus becomes less likely for cooling fluid to find its way to the outside of the strand compared to the arrangement of Fig 1.

Fig 2 is described in relation to C-shaped profiles. In another embodiment, segments with E-shaped profiles provide teeth with protrusions and with recessed seats. This embodiment would then provide two conduits per pair of segments as compared to one conduit per pair of segments with C-shaped profiles.

In a comparative example not covered by the claims, the protrusions and the recessed seats are rectangular. In another envisaged example not covered by the claims, the protrusions and the recessed seats are rectangular or triangular.

To even further increase path length, another embodiment provides more than one protrusion and/or recessed seat per tooth.

The segments 8a, 8b are typically made of a Copper alloy, although other materials such as Aluminum alloys are also envisaged. In a comparative example not covered by the claims, the segments 8a, 8b are typically joined only by gluing at the interface where the surfaces of the teeth make contact. Through gluing the joints becomes sealed permanently and adjacent segments 8a, 8b become connected permanently. In a particular embodiment, the glued connection is cured under the influence of heat. A press similar to the arrangement of Fig 1 that additionally provides heater plates may be used to provide the heat required for curing.

According to the herein claimed subject matter, the segments are joined through a process similar to that disclosed WO/2009/077594. WO/2009/077594 teaches a method for bonding two conductor pieces by friction stir welding. To bond the two conductors, heat is generated through friction until the layers of the surfaces to be joined are plasticized. In this process, temperatures are generally kept below the melting points of the materials. A rigid connection is formed by mixing the plasticized materials of the two surfaces.

To join two segments 8a, 8b of the present disclosure, heat is generated through friction until the surfaces of the teeth 9a, 9b are plasticized. As always in friction stir welding, temperatures are kept below the melting points of the segments. The segments are joined by mixing the plasticized top layers of the teeth 9a, 9b.

It is also envisaged to combine gluing and friction stir welding.

The foregoing objects can be applied both to the stator windings and to the rotor windings of a power generator or of a motor.

While the invention has been described in connection with what is presently considered to be the most practical and preferred embodiment, it is to be understood that the invention is not to be limited to the disclosed embodiments, but on the contrary, is intended to cover various modifications and equivalent arrangements included within the scope of the appended claims.

### REFERENCE NUMBERS

1a, 1b, 2a, 2b, 3a, 3c segments
4a, 4b teeth
5a, 5b conduits
6a, 6b, 6c, 6d press plates
7a, 7b directions of pressure applied
8a, 8b segments
9a, 9b teeth
10a protrusion
10b recessed seat

## Claims

1. A conductor for a winding of a rotating machine, the conductor comprising at least a strand,
the at least a strand comprising a first and a second segment (8a, 8b), each segment (8a, 8b) providing at least two teeth (9a, 9b) and a groove arranged in between the teeth (9a, 9b) and having in a cross section a C-shaped or E-shaped profile with two ends,
wherein
surfaces of the teeth (9a, 9b) of the first segment (8a) mate surfaces of the teeth of the second segment (8b),
said surfaces of the teeth (9a, 9b) of the first segment (8a) and of the teeth of the second segment (8b) are configured to be mated such that the at least one strand encloses a conduit (11) configured to carry a cooling fluid,
for each segment (8a, 8b) at least one (9b) of the teeth (9a, 9b) of the segment (8a, 8b), the at least one tooth being arranged at one of said ends of the respective segment, provides at least one protrusion (10a) and at least a second one (9a) of the teeth of the segment, the at least one second tooth being arranged at the other one of said ends of the respective segment, provides one recessed seat (10b) such that any sideways displacement of any one of the segments (8a, 8b) with respect to the other segment (8a, 8b) is hindered by virtue of a joint formed by a combination of the protrusions (10a) and the recessed seats (10b), **characterized in that** the segments (8a, 8b) are joined by friction stir welding or a combination of gluing and friction stir welding, wherein the at least one protrusion (10a) of each segment (8a, 8b) has the shape of a spherical cap in the cross-section.

2. A conductor according to claim 1, wherein each segment (8a, 8b) provides at least three teeth (9a, 9b).

3. A conductor according to claim 1, wherein the cooling fluid is water.

4. A conductor according to claim 1, wherein the cooling fluid is hydrogen.

5. A conductor according to claim 1, wherein the cooling fluid is air.

6. A conductor according to any of the claims 1 to 5, wherein the mating surfaces of the teeth are configured to provide a tight connection so the conduit (11) is sealed.

7. A rotating machine with a conductor according to any of the previous claims.

## Patentansprüche

1. Leiter für eine Wicklung einer rotierenden Maschine, wobei der Leiter mindestens einen Strang umfasst, wobei der mindestens eine Strang ein erstes und ein zweites Segment (8a, 8b) umfasst, wobei jedes Segment (8a, 8b) mindestens zwei Zähne (9a, 9b) bereitstellt und eine Nut, die zwischen den Zähnen (9a, 9b) angeordnet ist und ein in einem Querschnitt als C-förmiges oder E-förmiges Profil mit zwei Enden aufweist,
wobei
Oberflächen der Zähne (9a, 9b) des ersten Segments (8a) mit Oberflächen der Zähne des zweiten Segments (8b) zusammenpassen,
wobei die Oberflächen der Zähne (9a, 9b) des ersten Segments (8a) und die Zähne des zweiten Segments (8b) konfiguriert sind um so verbunden zu werden, dass der mindestens eine Strang eine Leitung (11) umschließt, die konfiguriert ist um eine Kühlflüssigkeit zu fördern,
wobei für jedes Segment (8a, 8b) mindestens einer (9b) der Zähne (9a, 9b) des Segments (8a, 8b), wobei der mindestens eine Zahn an einem der Enden des jeweiligen Segments angeordnet ist, mindestens einen Vorsprung (10a) bereitstellt und mindestens ein zweiter (9a) der Zähne des Segments, wobei der mindestens eine zweite Zahn an dem anderen der Enden des jeweiligen Segments angeordnet ist, einen vertieften Sitz (10b) bereitstellt, so dass jede seitliche Verschiebung von einem der Segmente (8a, 8b) in Bezug auf das andere Segment (8a, 8b) verhindert wird durch eine Verbindung, die durch eine Kombination der Vorsprünge (10a) und der vertieften Sitze (10b) geformt wird, **dadurch gekennzeichnet, dass**
die Segmente (8a, 8b) miteinander verbunden werden durch Reibschweißen oder eine Kombination von Kleben und Reibschweißen, wobei der mindestens eine Vorsprung (10a) jedes Segments (8a, 8b) die Form einer Kugelhaube im Querschnitt hat.

2. Leiter nach Anspruch 1, wobei jedes Segment (8a, 8b) mindestens drei Zähne (9a, 9b) bereitstellt.

3. Leiter nach Anspruch 1, wobei die Kühlflüssigkeit Wasser ist.

4. Leiter nach Anspruch 1, wobei die Kühlflüssigkeit Wasserstoff ist.

5. Leiter nach Anspruch 1, wobei die Kühlflüssigkeit Luft ist.

6. Leiter nach einem der Ansprüche 1 bis 5, wobei die zusammenpassenden Oberflächen der Zähne so konfiguriert sind, dass sie eine dichte Verbindung bereitstellen, so dass die Leitung (11) abgedichtet ist.

7. Rotierende Maschine mit einem Leiter nach einem der vorstehenden Ansprüche.

## Revendications

1. Conducteur pour un enroulement d'une machine rotative, le conducteur comprenant au moins un fil, le au moins un fil comprenant un premier et un deuxième segment (8a, 8b), chaque segment (8a, 8b) présentant au moins deux dents (9a, 9b) et une rainure ménagée entre les dents (9a, 9b) et présentant un profil en C ou en E en coupe transversale avec deux extrémités,
dans lequel
les surfaces des dents (9a, 9b) du premier segment (8a) s'accouplent aux surfaces des dents du deuxième segment (8b),
lesdites surfaces des dents (9a, 9b) du premier segment (8a) et des dents du deuxième segment (8b) sont configurées pour s'accoupler de sorte que le au moins un fil renferme un conduit (11) configuré pour transporter un fluide de refroidissement,
pour chaque segment (8a, 8b), au moins une (9b) des dents (9a, 9b) du segment (8a, 8b), ladite au moins une dent étant agencée au niveau d'une desdites extrémités du segment respectif, fournit au moins une partie saillante (10a) et au moins une deuxième (9a) des dents du segment, la au moins une deuxième dent étant disposé à l'autre desdites extrémités du segment respectif, fournit un logement évidé (10b) de telle sorte que n'importe quel déplacement latéral de l'un quelconque des segments (8a, 8b) par rapport à l'autre segment (8a, 8b) soit entravé en raison d'un joint formé par une combinaison des parties saillantes (10a) et des logements évidés (10b), **caractérisé en ce que**
les segments (8a, 8b) sont reliés par soudage par friction-malaxage ou par une combinaison de collage et soudage par friction-malaxage, dans lequel la au moins une partie saillante (10a) de chaque segment (8a, 8b) a la forme d'une calotte sphérique en section transversale.

2. Conducteur selon la revendication 1, dans lequel chaque segment (8a, 8b) présente au moins trois dents (9a, 9b).

3. Conducteur selon la revendication 1, dans lequel le fluide de refroidissement est de l'eau.

4. Conducteur selon la revendication 1, dans lequel le fluide de refroidissement est de l'hydrogène.

5. Conducteur selon la revendication 1, dans lequel le fluide de refroidissement est de l'air.

6. Conducteur selon l'une quelconque des revendications 1 à 5, dans lequel les surfaces d'accouplement des dents sont configurées pour assurer une connexion étanche de sorte que le conduit (11) soit scellé.

7. Machine rotative avec un conducteur selon l'une quelconque des revendications précédentes.
